# FASCICULE DE BREVET EUROPEEN

(11) **EP 0 800 757 B1**
(45) Date de publication et mention de la délivrance du brevet: **19.09.2001**
(21) Numéro de dépôt: 97440030.1
(22) Date de dépôt: 03.04.1997
(51) Int. Cl.: A01B 71/06, A01D 67/00

(54) **Machine agricole avec moyen de liaison à un véhicule tracteur et carter de renvoi pivotants**
Landmaschine mit einem drehbaren Verbindungsmittel an einen Traktor und mit einem drehbaren Getriebegehäuse
Agricultural machine with a pivoting connecting means to a tractor vehicle and a pivoting gearbox

(30) Priorité: 09.04.1996 FR 9604548
(43) Date de publication de la demande: 15.10.1997
(73) Titulaire: KUHN S.A., 67700 Saverne (FR)
(72) Inventeur: Ermacora, Rino, 67700 ST Jean Saverne (FR); Walch, Martin, 67490 Dettwiller (FR); Wattron, Bernard, 67700 Haegen (FR)

(56) Documents cités:
- DE-U- 9 414 597
- US-A- 5 272 859

## Description

La présente invention se rapporte à une machine agricole comportant :
- un corps muni d'au moins un organe de travail ;
- un moyen de liaison permettant de lier ladite machine agricole à un véhicule tracteur, lequel moyen de liaison est lié audit corps par une première articulation d'axe dirigé vers le haut ;
- un organe de manoeuvre destiné à pivoter le moyen de liaison par rapport audit corps autour de l'axe de ladite première articulation, ledit moyen de liaison pouvant ainsi être placé dans au moins deux positions de travail ;
- des organes de transmission destinés à assurer l'animation dudit (desdits) organe(s) de travail, ces organes de transmission comportant au moins un carter de renvoi lié au corps par une deuxième articulation d'axe également dirigé vers le haut ;
et
- un moyen de pilotage destiné à pivoter ledit carter de renvoi par rapport audit corps autour de l'axe de ladite deuxième articulation, ledit carter de renvoi pouvant être placé dans des positions opérationnelles correspondant auxdites positions de travail du moyen de liaison.

Une machine agricole de ce type est connue par le document **EP 0 277 343 A1** : il s'agit d'une faucheuse-conditionneuse. Cette machine connue comporte tout d'abord un corps qui est constitué d'un châssis roulant sur le sol au moyen de deux roues, et d'un mécanisme de récolte suspendu dans le châssis à l'aide d'un dispositif de suspension à quadrilatère déformable tiré. Cette machine connue comporte également un timon permettant de lier celle-ci à un véhicule tracteur. Ce timon est lié à la partie médiane du châssis au moyen d'une articulation d'axe dirigé sensiblement verticalement de sorte à pouvoir occuper au moins deux positions de travail par pivotement autour dudit axe. Le mécanisme de récolte, quant à lui, comporte une structure porteuse portant des tambours faucheurs et un rotor de conditionnement implanté derrière ces derniers.

Cette machine connue comporte en outre des organes de transmission destinés à assurer l'animation des tambours faucheurs et du rotor de conditionnement. Ces organes de transmission comportent tout d'abord un dispositif de transmission implanté à la partie frontale du timon et destiné à recevoir le mouvement à partir de la prise de force du véhicule tracteur via un premier arbre de transmission télescopique à joints universels. Lesdits organes de transmission comportent ensuite un carter de renvoi lié à la structure porteuse du mécanisme de récolte au moyen d'une articulation d'axe sensiblement parallèle à l'axe de l'articulation liant le timon au châssis. Ce carter de renvoi reçoit le mouvement de l'arbre de sortie du dispositif de transmission via un deuxième arbre de transmission télescopique à joints universels. L'arbre de sortie du carter de renvoi transmet, quant à lui, le mouvement aux organes d'entraînement du mécanisme de récolte.

L'axe de l'articulation liant le carter de renvoi à la structure porteuse du mécanisme de récolte est situé dans le plan vertical dirigé dans la direction de déplacement et contenant l'axe de l'articulation liant le timon au châssis, et devant ce dernier axe. De ce fait, il est prévu de pivoter ledit carter de renvoi autour de son axe d'articulation lorsque le timon est pivoté dans ses différentes positions, de telle sorte que l'arbre d'entrée du carter de renvoi soit toujours dirigé vers l'avant du timon. Cette machine connue comporte à cet effet un moyen de pilotage qui est constitué d'une chape de pilotage. Celle-ci comporte une première demi-chape de pilotage guidée en rotation entre les deux joints universels du deuxième arbre de transmission télescopique et une deuxième demi-chape de pilotage fixée sur le carter de renvoi et dans laquelle est guidé en rotation l'arbre d'entrée dudit carter de renvoi. Ces deux demi-chapes sont liées l'une à l'autre au moyen d'une articulation présentant un axe sensiblement horizontal et passant par le centre du joint universel du deuxième arbre de transmission télescopique situé du côté de l'arbre d'entrée du carter de renvoi.

Dans cette machine connue, le pilotage de l'orientation du carter de renvoi se fait à partir du pivotement du timon via le deuxième arbre de transmission télescopique. En outre, l'articulation liant entre elles les deux demi-chapes de pilotage permet au mécanisme de récolte de se déplacer par rapport au châssis pour s'adapter au relief du sol.

Le moyen de pilotage utilisé sur cette machine connue présente quelques inconvénients.

Il nécessite tout d'abord un arbre de transmission télescopique à joints universels spécial étant donné que la première demi-chape de pilotage y est guidée en rotation au moyen de deux roulements.

Le montage nécessite ensuite le respect de tolérances d'usinage relativement serrées puisque l'axe de l'articulation liant les deux demi-chapes de pilotage entre elles doit passer précisément par le centre du joint universel du deuxième arbre de transmission télescopique situé du côté de l'arbre d'entrée du carter de renvoi.

Par le document **US 5,272,859,** il est connu une autre faucheuse-conditionneuse comparable à celle décrite dans le document EP 0 277 343 A1. Le moyen de pilotage qui est destiné à pivoter le carter de renvoi pour orienter celui-ci convenablement en fonction de la position du timon, est constitué ici par une bielle de pilotage télescopique implantée entre le timon et le carter de renvoi. Cette bielle de pilotage télescopique comporte une section intérieure liée au timon au moyen d'une articulation sphérique et apte à coulisser dans une section extérieure liée indirectement au carter de renvoi. A son extrémité en regard du carter de renvoi, la section extérieure de la bielle de pilotage télescopique présente deux oreilles entre lesquelles s'étend un logement tubulaire rigide solidaire du carter de renvoi, lesdites oreilles étant liées audit logement au moyen d'une articulation présentant un axe sensiblement horizontal et passant par le centre du joint universel du deuxième arbre de transmission télescopique situé du côté du carter de renvoi.

Dans cette machine connue, le pilotage de l'orientation du carter de renvoi se fait donc également à partir du pivotement du timon via la bielle de pilotage télescopique. En outre, la faculté qu'a la bielle de pilotage télescopique de s'allonger et de se raccourcir combinée avec le pivotement autorisé par l'articulation liant ladite bielle au carter de renvoi permettent au mécanisme de récolte de se déplacer par rapport au châssis pour s'adapter au relief du sol.

Pour permettre à la section intérieure de coulisser facilement dans la section extérieure, il est nécessaire de prévoir un jeu suffisant entre ces deux sections. Dans ces conditions, l'absorption du couple d'entraînement appliqué au carter de renvoi provoque une flexion de la bielle de pilotage télescopique, qui risque de freiner le raccourcissement de celle-ci lors de l'adaptation du mécanisme de récolte au relief du sol. Du reste, l'allongement et le raccourcissement de la bielle de pilotage télescopique sous charge importante risque de provoquer une usure relativement rapide de ladite bielle.

Dans le document **EP 0 678 237 A1** est décrite une faucheuse qui comporte tout d'abord un corps constitué d'un châssis roulant sur le sol au moyen de deux roues, et d'un mécanisme de coupe suspendu dans le châssis à l'aide d'un dispositif de suspension permettant au mécanisme de coupe de se déplacer par rapport audit châssis pour s'adapter au relief du sol. Ladite faucheuse comporte également un timon permettant de la lier à un véhicule tracteur. Ce timon est lié à la partie médiane du châssis au moyen d'une articulation d'axe dirigé sensiblement verticalement de sorte à pouvoir occuper au moins deux positions de travail par pivotement autour dudit axe.

Cette faucheuse connue comporte en outre des organes de transmission destinés à assurer l'animation des outils de coupe. Ces organes de transmission comportent tout d'abord un carter de renvoi supérieur fixé sur le timon et dont l'arbre d'entrée reçoit le mouvement de l'arbre de sortie d'un dispositif de transmission implanté à la partie frontale du timon via un arbre de transmission télescopique à joints universels. L'arbre de sortie de ce carter de renvoi supérieur s'étend sensiblement parallèlement à l'axe de l'articulation liant le timon au châssis. Cet arbre de sortie est coaxial avec l'arbre d'entrée d'un carter de renvoi inférieur dont l'arbre de sortie est lié aux organes d'entraînement du mécanisme de coupe via un autre arbre de transmission télescopique à joints universels.

Le carter de renvoi inférieur est ainsi porté par le carter de renvoi supérieur de sorte à pouvoir pivoter autour de l'axe commun de l'arbre de sortie du carter de renvoi supérieur et de l'arbre d'entrée du carter de renvoi inférieur. L'orientation du carter de renvoi inférieur lors du pivotement du timon est réalisée par un moyen de guidage. Dans une première réalisation, ce moyen de guidage est constitué d'une tringle implantée entre le carter de renvoi inférieur et le mécanisme de coupe, sensiblement parallèlement à l'arbre de transmission liant l'arbre de sortie dudit carter de renvoi inférieur aux organes d'entraînement du mécanisme de coupe. Dans une deuxième réalisation, le moyen de guidage est constitué d'un parallélogramme déformable lié au châssis.

Dans cette faucheuse connue le pilotage de l'orientation du carter de renvoi inférieur se fait donc également à partir du pivotement du timon via le carter de renvoi supérieur. Cette solution est relativement onéreuse car elle nécessite deux carters de renvoi capables de pivoter l'un par rapport à l'autre.

Le but de la présente invention est de proposer une autre solution qui ne présente pas les inconvénients des solutions connues.

A cet effet, une première machine agricole selon l'invention est caractérisée en ce que le moyen de pilotage de l'orientation du carter de renvoi est implanté entre ledit carter de renvoi et l'organe de manoeuvre destiné à pivoter le moyen de liaison par rapport au corps de la machine.

De cette sorte, le carter de renvoi est amené dans la position opérationnelle adéquate lorsque l'organe de manoeuvre amène le moyen de liaison dans l'une quelconque de ses différentes positions de travail.

Dans cette première machine agricole de l'invention, le pilotage de l'orientation du carter de renvoi n'est donc pas fait à partir du moyen de liaison lui-même, mais, entre autre, à partir de l'organe de manoeuvre destiné à amener le moyen de liaison dans ses différentes positions de travail.

L'invention concerne également les caractéristiques ci-après considérées dans leurs combinaisons définies par les reven dications.

Dans une première famille de réalisations, ledit moyen de pilotage comporte notamment un câble lié entre l'organe de manoeuvre et le carter de renvoi.

Ce câble peut passer dans une gaine et commander le pivotement du carter de renvoi uniquement dans un sens, tandis que le moyen de pilotage comportera en sus un organe élastique de pilotage implanté entre le corps et le carter de renvoi et commandant le pivotement dudit carter de renvoi dans l'autre sens. Dans ce cas, il pourra être avantageusement prévu que la réaction générée par le couple d'entraînement appliqué au carter de renvoi tende à faire pivoter ledit carter de renvoi dans le même sens que l'organe élastique de pilotage. Il pourra également être avantageusement prévu que l'organe de manoeuvre agisse sur le câble au moyen d'un élément élastique, de préférence de compression.

Mais il peut également être prévu que le câble constitue une boucle fermée qui passe dans deux demi-gaines implantées sur le corps. Dans ce cas, le câble commandera le pivotement du carter de renvoi dans les deux sens.

Il pourra d'ailleurs être avantageusement prévu que la gaine ou les deux demi-gaines soient mises en compression par un élément élastique de compression.

Lorsque l'organe de manoeuvre comporte un vérin de manoeuvre articulé entre le moyen de liaison et le corps, le câble pourra être avantageusement lié audit vérin dans le voisinage de l'articulation liant le vérin au corps. A cet effet, le vérin de manoeuvre pourra avantageusement comporter un prolongement s'étendant au-delà de l'articulation liant ledit vérin au corps et auquel sera lié le câble.

Dans une deuxième famille de réalisations, ledit moyen de pilotage comporte une tringlerie. Cette tringlerie pourra comporter un levier articulé sur le corps, une première bielle implantée entre l'organe de manoeuvre et ledit levier et une deuxième bielle implantée entre ledit levier et le carter de renvoi. Dans ce cas, il pourra être prévu que ledit levier soit articulé à l'une de ses extrémités sur le corps, que la deuxième bielle soit articulée sur l'autre extrémité dudit levier et que la première bielle soit articulée sur ledit levier entre les deux extrémités de ce dernier.

Lorsque l'organe de manoeuvre comporte un vérin de manoeuvre articulé entre le moyen de liaison et le corps, la tringlerie pourra, là-aussi, être avantageusement liée audit vérin dans le voisinage de l'articulation liant ledit vérin au corps, ledit vérin pouvant alors aussi comporter un prolongement qui s'étend au-delà de ladite articulation et auquel sera liée la tringlerie.

Une deuxième machine agricole selon l'invention est caractérisée en ce que le moyen de pilotage de l'orientation du carter de renvoi comporte:
- un premier vérin de pilotage implanté entre le moyen de liaison et le corps, et
- un deuxième vérin de pilotage implanté entre le corps et le carter de renvoi et branché en série avec le premier vérin de pilotage.

L'invention concerne également les caractéristiques ci-après considérées dans leurs combinaisons définies par les revendications.

Le premier vérin de pilotage et le deuxième vérin de pilotage pourront être du type à simple effet. Le deuxième vérin de pilotage commandera ainsi le pivotement du carter de renvoi dans un sens, tandis que le moyen de pilotage comportera alors un organe élastique de pilotage implanté entre le corps et le carter de renvoi et commandant le pivotement dudit carter de renvoi dans l'autre sens. Là-aussi, il sera avantageux que la réaction générée par le couple d'entraînement appliqué au carter de renvoi tende à faire pivoter ledit carter de renvoi dans le même sens que l'organe élastique de pilotage.

Lorsque l'organe de manoeuvre comporte un vérin de manoeuvre articulé entre le moyen de liaison et le corps, ce vérin de manoeuvre et le premier vérin de pilotage pourront former un ensemble articulé entre le moyen de liaison et le corps. Cet ensemble pourra comporter un corps de cylindre muni d'une chambre de manoeuvre et d'une chambre de pilotage, et une tige munie d'un piston de manoeuvre qui s'étend dans la chambre de manoeuvre pour former avec celle-ci le vérin de manoeuvre, ladite tige s'étendant par ailleurs dans la chambre de pilotage pour former avec celle-ci le premier vérin de pilotage.

Mais il est bien entendu parfaitement possible que le premier vérin de pilotage et le deuxième vérin de pilotage soient du type à double effet et soient branchés en circuit fermé.

Lorsque l'organe de manoeuvre comporte un vérin de manoeuvre articulé entre le moyen de liaison et le corps, ce vérin de manoeuvre et le premier vérin de pilotage pourront là-aussi former un ensemble articulé entre le moyen de liaison et le corps. Cet ensemble pourra comporter un corps de cylindre muni d'une chambre de manoeuvre et d'une chambre de pilotage, et une tige munie d'un piston de manoeuvre qui s'étend dans la chambre de manoeuvre pour former avec celle-ci le vérin de manoeuvre, ladite tige comportant par ailleurs un piston de pilotage s'étendant dans la chambre de pilotage pour former avec celle-ci le premier vérin de pilotage.

Dans chacune des deux machines agricoles selon l'invention, il peut être prévu que le carter de renvoi occupe deux positions opérationnelles définies chacune par une butée respective aménagée sur le corps.

Les caractéristiques suivantes sont considérées comme techniquement possibles et peuvent être combinées avec les caractéristiques précédentes:
- le vérin de manoeuvre est du type à double effet ;
- les organes de transmission comportent au moins un arbre de transmission télescopique à joints universels branché sur l'arbre d'entrée du carter de renvoi ;
- ledit arbre de transmission ou l'un au moins desdits arbres de transmission est supporté par le moyen de liaison ;
- les organes de transmission reçoivent le mouvement de la prise de force du véhicule tracteur auquel est destinée à être attelée la machine agricole ;
- le corps s'appuie sur le sol à l'aide d'au moins une roue et le moyen de liaison est constitué d'un timon lié à la partie médiane dudit corps ;
- le corps comporte un châssis auquel est lié le moyen de liaison et dans lequel est (sont) suspendu(s) le (les) organe(s) de travail au moyen d'un dispositif de suspension de sorte à pouvoir se déplacer par rapport au châssis pour s'adapter au relief du sol.

D'autres caractéristiques de l'invention ressortent de la description suivante de quelques exemples de réalisation non limitatifs faite en référence au dessin annexé dans lequel :
- la figure 1 montre une vue de dessus d'une machine agricole selon l'invention ;
- la figure 2 montre le moyen de pilotage de l'orientation du carter de renvoi de la machine agricole de la figure 1 en position de fauchage à gauche ;
- la figure 3 montre ledit moyen de pilotage en position de fauchage à droite ;
- la figure 4 montre un deuxième exemple de réalisation dudit moyen de pilotage en position de fauchage à gauche ;
- la figure 5 montre le moyen de pilotage de la figure 4 en position de fauchage à droite ;
- la figure 6 montre un troisième exemple de réalisation dudit moyen de pilotage en position de fauchage à gauche ;
- la figure 7 montre le moyen de pilotage de la figure 6 en position de fauchage à droite ;
- la figure 8 montre un quatrième exemple de réalisation dudit moyen de pilotage en position de fauchage à gauche ;
- la figure 9 montre le moyen de pilotage de la figure 8 en position de fauchage à droite ;
- la figure 10 montre un cinquième exemple de réalisation dudit moyen de pilotage en position de fauchage à gauche ;
- la figure 11 montre le moyen de pilotage de la figure 10 en position de fauchage à droite.

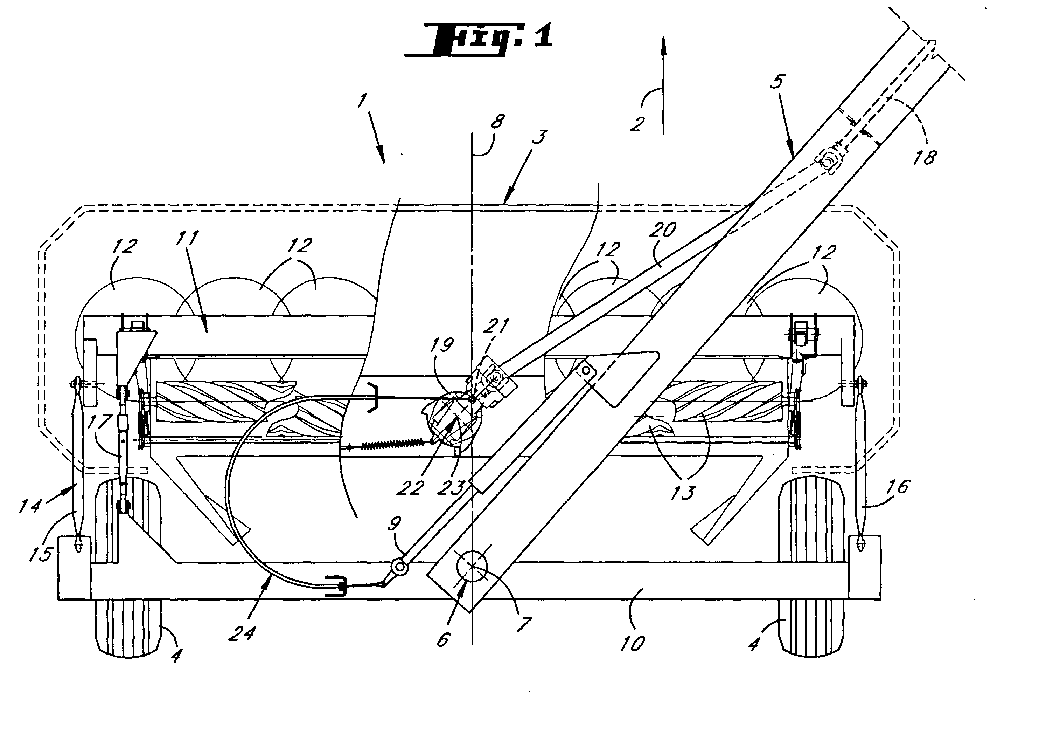

Les figures 1 à 3 montrent une machine agricole selon l'invention, réalisée sous forme de faucheuse-conditionneuse (1). Celle-ci est attelée à un véhicule tracteur non représenté qui, durant l'utilisation, la tire dans le sens d'avance (2).

Dans la suite de la description, les notions suivantes "avant", "arrière", "devant" et "derrière" sont définies par rapport à ce sens d'avance (2) et les notions "droite" et "gauche" sont définies en regardant la faucheuse-conditionneuse (1) de l'arrière dans le sens d'avance (2).

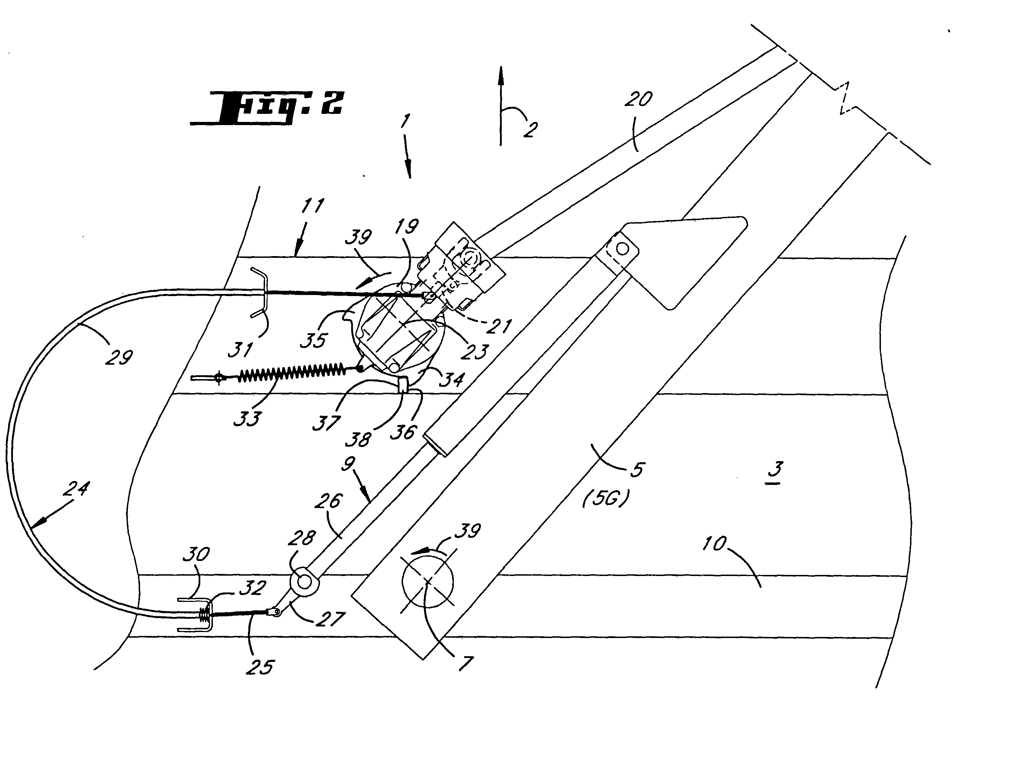

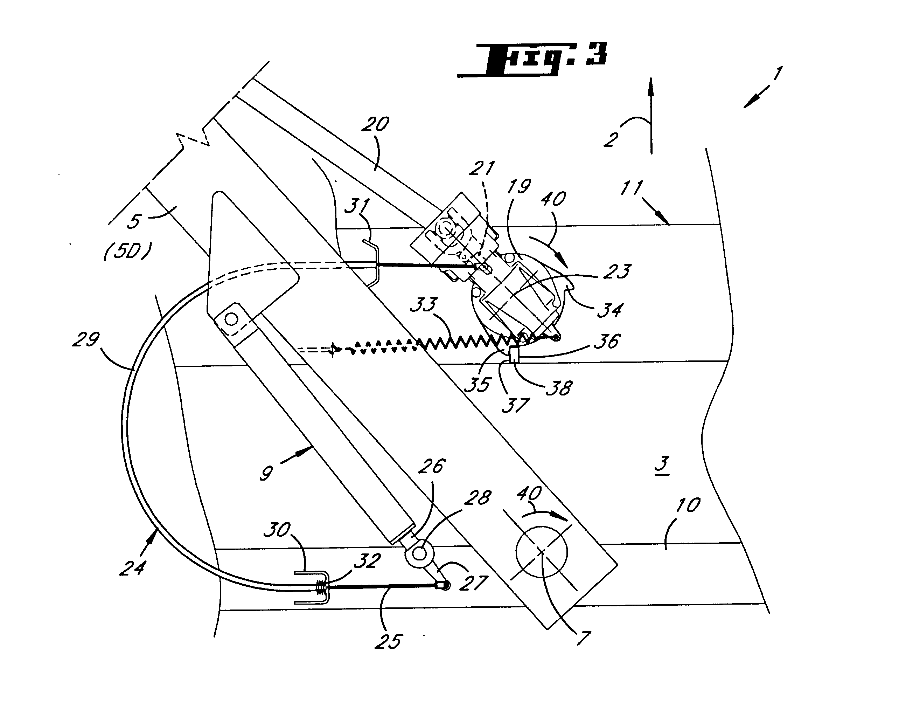

Cette faucheuse-conditionneuse se compose d'un corps (3) roulant sur le sol au moyen de deux roues (4), et d'un timon (5) destiné à être lié, à son extrémité avant, audit véhicule tracteur d'une manière connue d'un homme du métier. Ledit timon (5) est par ailleurs lié à son extrémité arrière au corps (3) à l'aide d'une articulation (6) d'axe géométrique (7) dirigé vers le haut (dans l'exemple représenté, cet axe géométrique (7) est sensiblement vertical et s'étend sensiblement dans le plan vertical médian (8) du corps (3) dirigé suivant la direction d'avance (2)). La position angulaire du timon (5) par rapport au corps (3) peut être modifiée en faisant pivoter le timon (5) autour de l'axe géométrique (7) de l'articulation (6). La mise dans la position angulaire souhaitée et le maintien dans celle-ci sont réalisés par un vérin de manoeuvre hydraulique (9) articulé entre le timon (5) et le corps (3). Grâce à cet agencement, le corps (3) de la faucheuse-conditionneuse (1) peut, notamment au travail, s'étendre à gauche (figures 1 et 2) ou à droite (figure 3) du véhicule tracteur. Ceci autorise le fauchage en aller et retour.

Le corps (3) de la faucheuse-conditionneuse (1) comporte tout d'abord un châssis (10) qui s'appuie sur le sol au moyen des deux roues (4) lesquelles s'étendent chacune près d'une extrémité extérieure respective dudit châssis (10). Le corps (3) de la faucheuse-conditionneuse (1) comporte par ailleurs un mécanisme de récolte (11) muni d'organes de coupe (12) et d'organes de traitement (13) du produit coupé par les organes de coupe (12) (dans l'exemple représenté les organes de coupe (12) sont constitués de disques rotatifs et les organes de traitement (13) sont constitués d'une paire de rouleaux de conditionnement contrarotatifs ; de tels disques et de tels rouleaux de conditionnement sont connus d'un homme du métier). Ce mécanisme de récolte (11) est lié au châssis (10) au moyen d'un dispositif de suspension (14) constitué dans l'exemple représenté de trois bielles de suspension (15, 16, 17) : deux bielles de suspension inférieures (15, 16) et une bielle de suspension supérieure (17). Ces trois bielles de suspension (15, 16, 17) forment avec le châssis (10) et le mécanisme de récolte (11) un quadrilatère déformable qui permet au mécanisme de récolte (11) de se déplacer essentiellement vers le haut et vers le bas par rapport au châssis (10) pour s'adapter au relief du sol indépendamment dudit châssis (10).

L'animation du mécanisme de récolte (11) est réalisé, par exemple, à partir de la prise de force du véhicule tracteur d'une manière connue par un homme du métier. Le mouvement arrive ainsi par un arbre (18) supporté par le timon (5) et est transmis à un carter de renvoi (19) par un arbre de transmission télescopique (20) à joints universels implanté entre ledit arbre (18) et l'arbre d'entrée (21) dudit carter de renvoi (19). Ce dernier est lié au mécanisme de récolte (11) et communique le mouvement à des organes d'entraînement des organes de coupe (12) et des organes de traitement (13), non représentés, mais à la portée d'un homme du métier.

Ledit carter de renvoi (19) est lié au mécanisme de récolte (11) au moyen d'une articulation (22) d'axe géométrique (23) dirigé vers le haut (dans l'exemple représenté, cet axe (23) est sensiblement parallèle à l'axe (7) et s'étend devant cet axe (7) ; il s'étend par ailleurs légèrement à gauche du plan vertical médian (8)). Grâce à cette articulation (22), l'arbre d'entrée (21) du carter de renvoi (19) est toujours dirigé vers l'extrémité avant du timon (5) quelle que soit la position angulaire qu'occupe ce dernier. Le placement et le maintien du carter de renvoi (19) dans la position angulaire adéquate sont réalisés par un moyen de pilotage (24).

Ce moyen de pilotage (24) comporte tout d'abord un câble (25) lié entre le vérin de manoeuvre (9) et le carter de renvoi (19). A cet effet, la tige (26) du vérin de manoeuvre (9) comporte un prolongement (27) s'étendant au-delà de l'articulation (28) liant le vérin de manoeuvre (9) au châssis (10) du corps (3). Ledit câble (25) passe également dans une gaine (29) s'étendant entre deux butées (30, 31) et mise en compression par un élément élastique (32). Dans l'exemple représenté, l'une de ces butées (30, 31) est solidaire du châssis (10), tandis que l'autre butée (31) est solidaire du mécanisme de récolte (11).

Ledit moyen de pilotage (24) comporte ensuite un organe élastique de pilotage (33) implanté entre le mécanisme de récolte (11) et le carter de renvoi (19). Dans l'exemple représenté, cet organe élastique de pilotage (33) est constitué d'un ressort de traction.

Le carter de renvoi (19) comporte enfin encore deux oreilles (34, 35) qui sont destinées à venir en contact avec la face (36, 37) respective d'un arrêt (38). Chacune de ces faces (36, 37) dudit arrêt (38) constitue ainsi une butée.

Le placement du carter de renvoi (19) dans la position opérationnelle adéquate est réalisé de la manière suivante.

Pour passer de la position de fauchage à gauche du véhicule tracteur (figures 1 et 2) à la position de fauchage à droite (figure 3), on raccourcit le vérin de manoeuvre (9) pour faire pivoter le timon (5) dans le sens (39) autour de l'axe géométrique (7) de la position de travail (5G) dans la position de travail (5D). Ce faisant, le prolongement (27) du vérin de manoeuvre (9) tire sur le câble (25) et fait pivoter le carter de renvoi (19) dans le même sens (39) autour de l'axe géométrique (23). Lorsque le timon (5) atteint sa position de travail (5D), l'oreille (35) du carter de renvoi (19) est en appui sur la face (37) de l'arrêt (38). L'élément élastique (32) permet la mise en appui de l'oreille (35) sur l'arrêt (38) quand le timon (5) atteint sa position (5D). Parallèlement, le pivotement du carter de renvoi (19) dans le sens (39) a sollicité l'organe élastique de pilotage (33) : celui-ci a emmagasiné de l'énergie .

Pour passer de la position de fauchage à droite du véhicule tracteur (figure 3) à la position de fauchage à gauche (figures 1 et 2), on allonge le vérin de manoeuvre (9) pour faire pivoter le timon (5) dans le sens (40) autour de l'axe géométrique (7) de la position de travail (5D) dans la position de travail (5G). Ce faisant, le prolongement (27) du vérin de manoeuvre (9) ne tire plus sur le câble (25) et c'est l'organe élastique de pilotage (33) qui va faire pivoter le carter de renvoi (19) dans le même sens (40) autour de l'axe géométrique (23). Lorsque le timon (5) atteint sa position de travail (5G), l'oreille (34) du carter de renvoi (19) est en appui sur la face (36) de l'arrêt (38) et y est maintenue en appui par l'organe élastique de pilotage (33). Parallèlement, la réaction générée par le couple d'entraînement appliqué au carter de renvoi (19) tend également à faire pivoter le carter de renvoi (19) dans le sens (40) et assiste donc l'organe élastique de pilotage (33) pour maintenir l'oreille (34) du carter de renvoi (19) en appui sur la face (36) de l'arrêt (38).

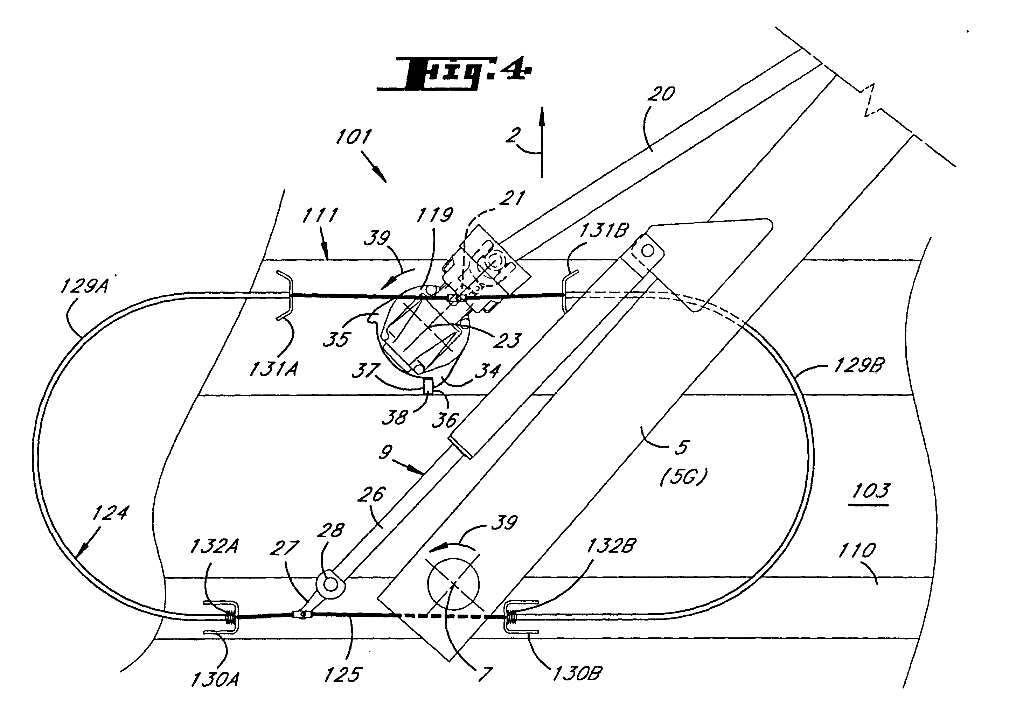

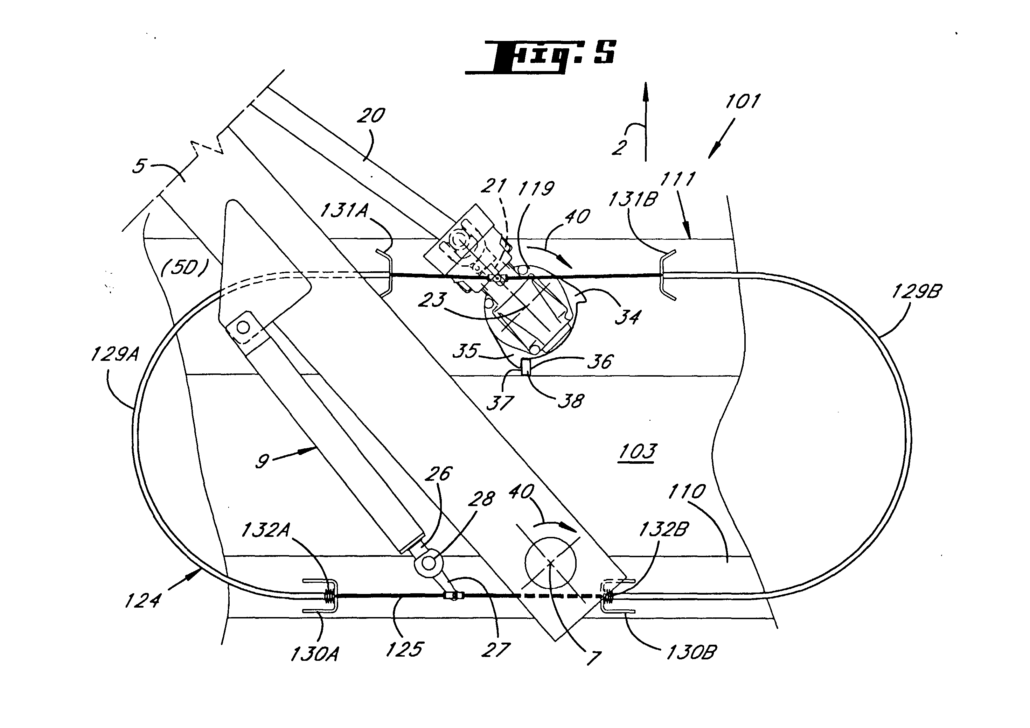

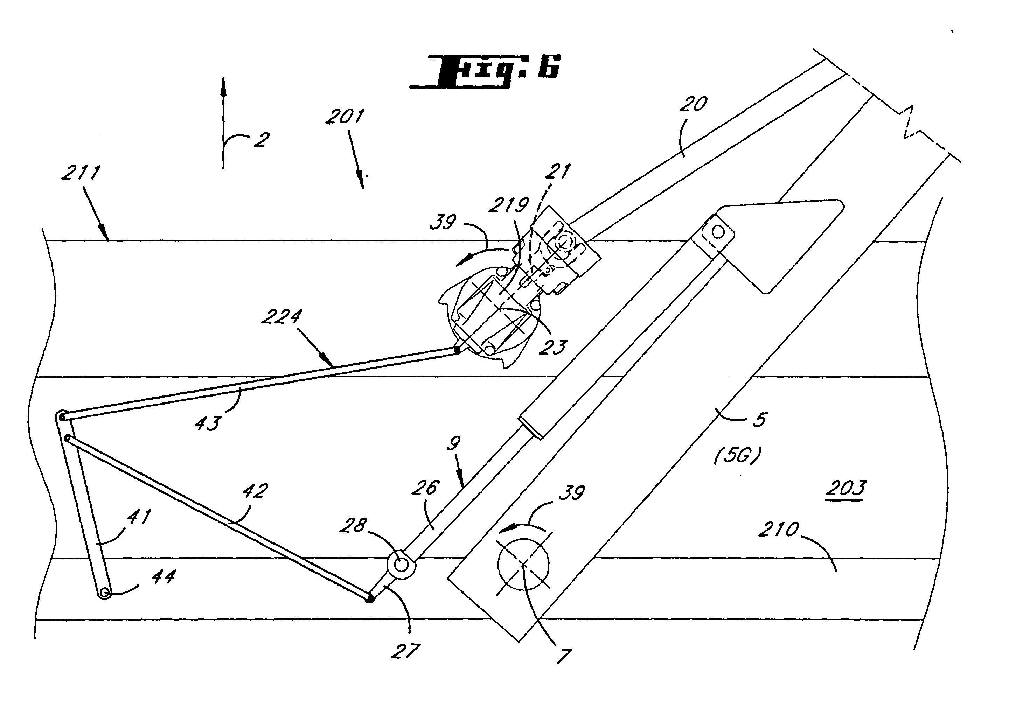

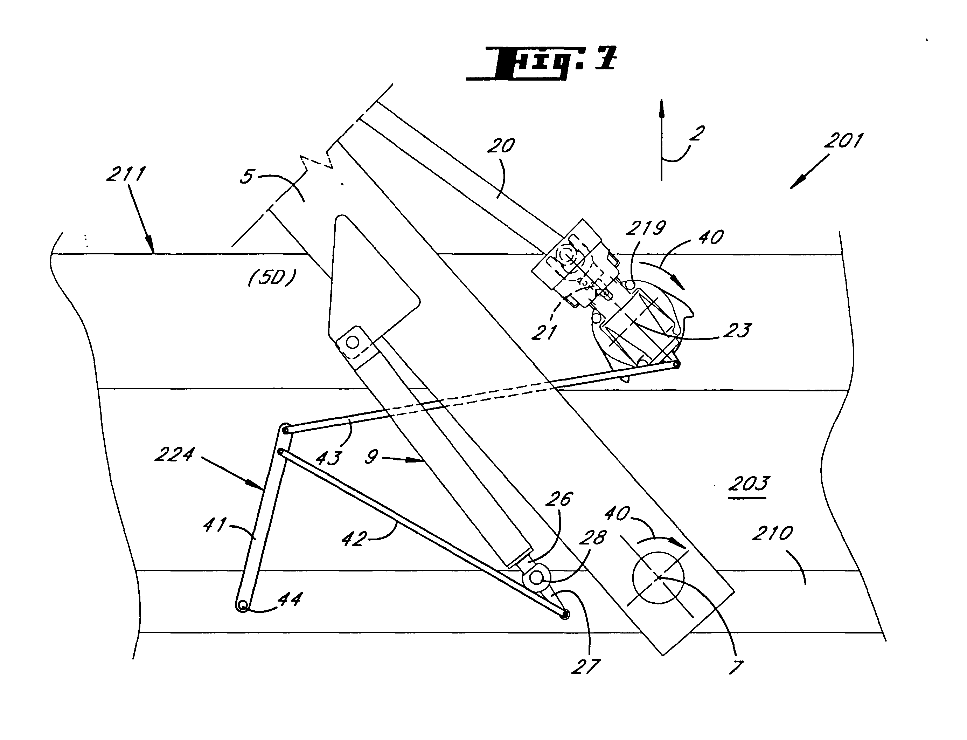

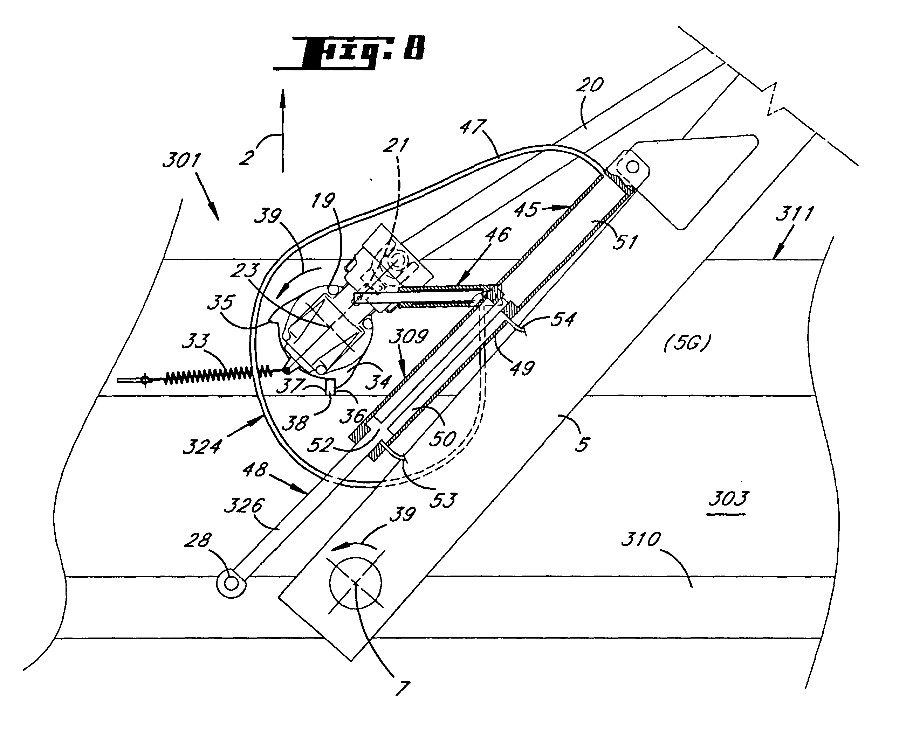

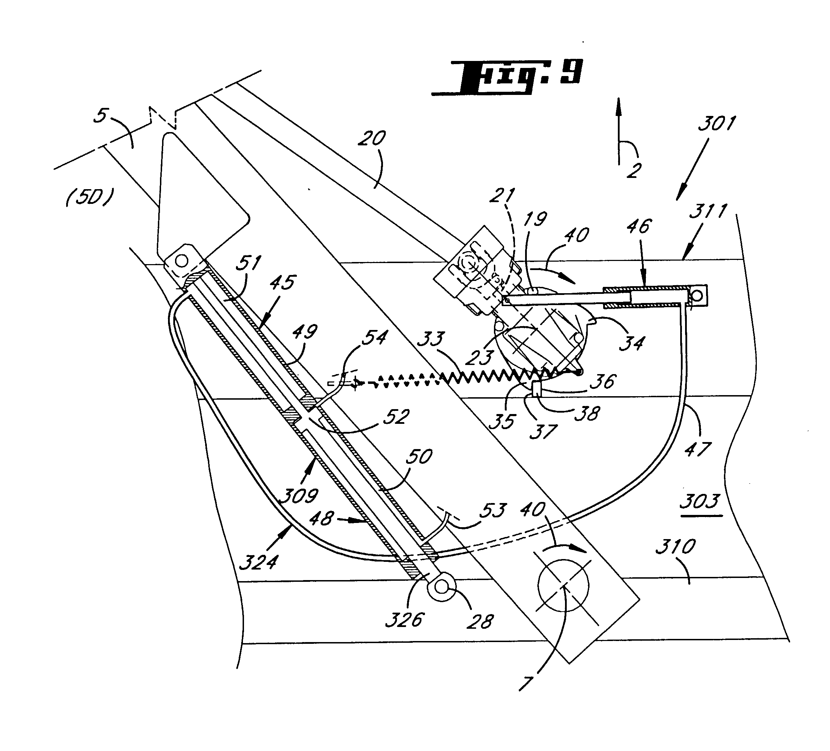

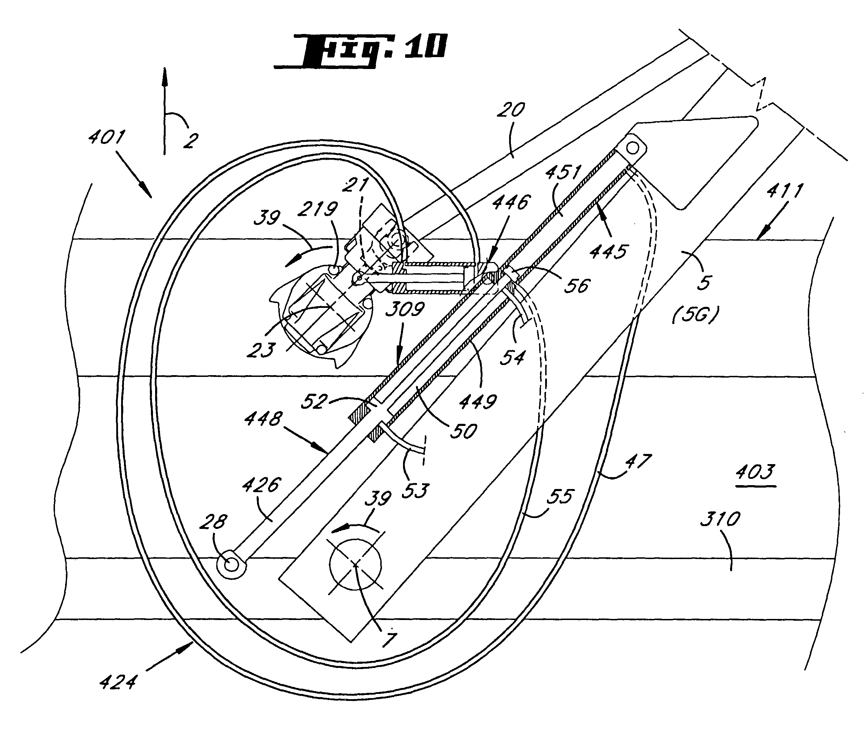

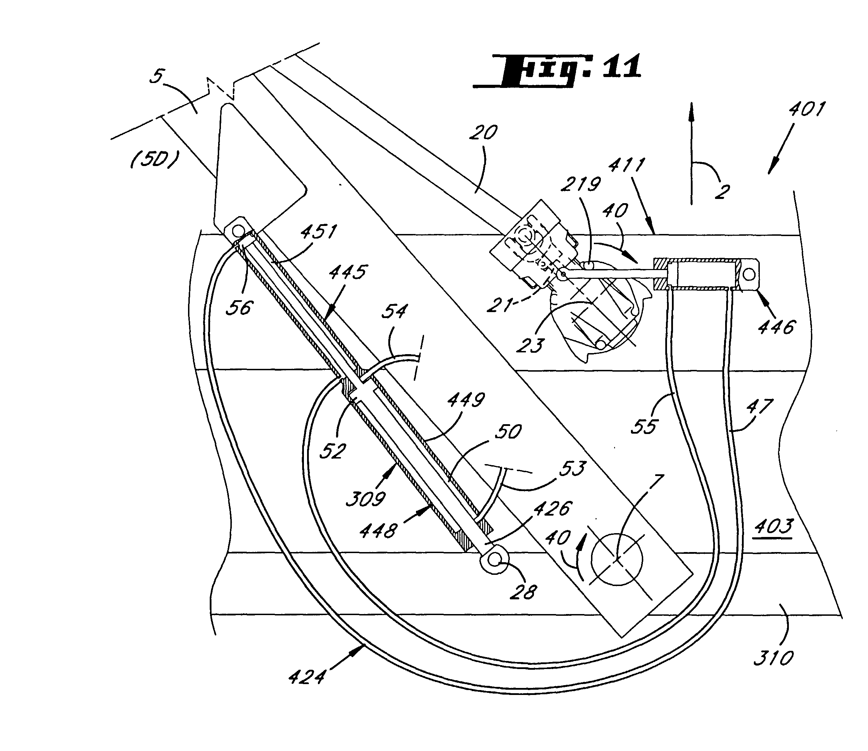

Les exemples de réalisation représentés sur les figures 4 à 11 comportent un certain nombre d'éléments qui ont été décrits précédemment. Ces éléments garderont en conséquence le même numéro de repère et ne seront pas redécrits. Ils comportent également un certain nombre d'éléments qui sont comparables à des éléments de la faucheuse-conditionneuse de l'exemple précédent. Ces éléments seront affectés du même numéro de repère que ces éléments comparables de l'exemple précédent augmenté de cent (figures 4 et 5), de deux cents (figures 6 et 7), de trois cents (figures 8 et 9) et de quatre cents (figures 10 et 11).

Les figures 4 et 5 montrent un deuxième exemple de réalisation d'un moyen de pilotage (124) équipant une machine agricole (101). Celui-ci comporte un câble unique (125) constituant une boucle fermée qui est liée au vérin de manoeuvre (9) et au carter de renvoi (119). Ledit câble (125) passe dans deux demi-gaines (129A, 129B) s'étendant chacune entre deux butées (130A, 131A, 130B, 131B) et mise chacune en compression par un élément élastique (132A, 132B) respectif. Les butées (130A, 130B) sont solidaires du châssis (110) du corps (103), tandis que les autres butées (131A, 131B) sont solidaires du mécanisme de récolte (111) dudit corps (103).

Le placement du carter de renvoi (119) dans la position opérationnelle adéquate est réalisé de la manière suivante.

Pour passer de la position de fauchage à gauche du véhicule tracteur (figure 4) à la position de fauchage à droite (figure 5), on raccourcit le vérin de manoeuvre (9) pour faire pivoter le timon (5) dans le sens (39) autour de l'axe géométrique (7) de la position de travail (5G) dans la position de travail (5D). Ce faisant, le prolongement (27) du vérin de manoeuvre (9) tire sur le câble (125) vers la droite pour faire pivoter le carter de renvoi (119) dans le même sens (39) autour de l'axe géométrique (23). Lorsque le timon (5) atteint sa position de travail (5D), l'oreille (35) du carter de renvoi (119) est en appui sur la face (37) de l'arrêt (38). Les éléments élastiques (132A, 132B) permettent la mise en appui de l'oreille (35) sur l'arrêt (38) quand le timon (5) atteint sa position (5D).

Pour passer de la position de fauchage à droite du véhicule tracteur (figure 5) à la position de fauchage à gauche (figure 4), on allonge le vérin de manoeuvre (9) pour faire pivoter le timon (5) dans le sens (40) autour de l'axe géométrique (7) de la position de travail (5D) dans la position de travail (5G). Ce faisant, le prolongement (27) du vérin de manoeuvre (9) tire sur le câble (125) vers la gauche pour faire pivoter le carter de renvoi (119) dans le même sens (40) autour de l'axe géométrique (23). Lorsque le timon (5) atteint sa position de travail (5G), l'oreille (34) du carter de renvoi (119) est en appui sur la face (36) de l'arrêt (38). Les éléments élastiques (132A, 132B) permettent là-aussi la mise en appui de l'oreille (34) sur l'arrêt (38) quand le timon (5) atteint sa position (5G).

Les figures 6 et 7 montrent un troisième exemple de réalisation d'un moyen de pilotage (224) équipant une machine agricole (201). Celui-ci est constitué d'une tringlerie qui comporte un levier (41) et deux bielles (42, 43). Dans cet exemple de réalisation, le levier (41) est lié, à son extrémité arrière, au châssis (210) du corps (203) au moyen d'une articulation (44). La première bielle (42), quant à elle, est articulée entre le prolongement (27) de la tige (26) du vérin de manoeuvre (9) et la partie médiane dudit levier (41). Enfin, la deuxième bielle (43) est articulée entre l'extrémité avant du levier (41) et la partie arrière du carter de renvoi (219).

Le placement du carter de renvoi (219) dans la position opérationnelle adéquate est réalisé de la manière suivante.

Pour passer de la position de fauchage à gauche du véhicule tracteur (figure 6) à la position de fauchage à droite (figure 7), on raccourcit le vérin de manoeuvre (9) pour faire pivoter le timon (5) dans le sens (39) autour de l'axe géométrique (7) de la position de travail (5G) dans la position de travail (5D). Ce faisant, le prolongement (27) du vérin de manoeuvre (9) tire sur la première bielle (42) et fait pivoter le levier (41) vers la droite. En pivotant vers la droite, le levier (41) pousse sur la deuxième bielle (43) pour faire pivoter le carter de renvoi (219) dans le même sens (39) autour de l'axe géométrique (23). Lorsque le timon (5) a atteint sa position de travail (5D), le carter de renvoi (219) se trouve également dans sa position opérationnelle convenable.

Pour passer de la position de fauchage à droite du véhicule tracteur (figure 7) à la position de fauchage à gauche (figure 6), on allonge le vérin de manoeuvre (9) pour faire pivoter le timon (5) dans le sens (40) autour de l'axe géométrique (7) de la position de travail (5D) dans la position de travail (5G). Ce faisant, le prolongement (27) du vérin de manoeuvre (9) pousse sur la première bielle (42) et fait pivoter le levier (41) vers la gauche. En pivotant vers la gauche, le levier (41) tire sur la deuxième bielle (43) pour faire pivoter le carter de renvoi (219) dans le même sens (40) autour de l'axe géométrique (23).

Les figures 8 et 9 montrent un quatrième exemple de réalisation d'un moyen de pilotage (324) équipant une machine agricole (301). Celui-ci comporte un premier vérin de pilotage (45) et un deuxième vérin de pilotage (46) branchés en série à l'aide d'une conduite (47). Dans cet exemple de réalisation, ce premier vérin de pilotage (45) et ce deuxième vérin de pilotage (46) sont du type à simple effet.

Le premier vérin de pilotage (45) et le vérin de manoeuvre (309) forment un ensemble (48) articulé entre le timon (5) et le châssis (310) du corps (303). Cet ensemble (48) comporte un corps de cylindre (49) présentant une chambre de manoeuvre (50) et une chambre de pilotage (51). Cet ensemble (48) comporte par ailleurs une tige (326) articulée à son extrémité extérieure sur le châssis (310) et dont l'extrémité intérieure est destinée à s'étendre dans la chambre de pilotage (51) pour former avec cette dernière le premier vérin de pilotage (45). Dans sa partie médiane, ladite tige (326) comporte aussi un piston de manoeuvre (52) qui s'étend dans la chambre de manoeuvre (50) pour former avec celle-ci le vérin de manoeuvre (309).

Le deuxième vérin de pilotage (46), quant à lui, est articulé entre le mécanisme de récolte (311) et le carter de renvoi (19).

Le moyen de pilotage (324) comporte enfin encore un organe élastique de pilotage (33) implanté entre le mécanisme de récolte (311) et le carter de renvoi (19).

Le placement du carter de renvoi (19) dans la position opérationnelle adéquate est réalisé de la manière suivante.

Pour passer de la position de fauchage à gauche du véhicule tracteur (figure 8) à la position de fauchage à droite (figure 9), on raccourcit le vérin de manoeuvre (309) en injectant du fluide par la conduite (53) pour faire pivoter le timon (5) dans le sens (39) autour de l'axe géométrique (7) de la position de travail (5G) dans la position de travail (5D). Ce faisant, l'extrémité intérieure de la tige (326) plonge de plus en plus profondément dans la chambre de pilotage (51) et chasse le fluide qui y est contenu, dans le deuxième vérin de pilotage (46) au travers de la conduite (47). De ce fait, le deuxième vérin de pilotage (46) s'allonge et fait pivoter le carter de renvoi (19) dans le même sens (39) autour de l'axe géométrique (23). Lorsque le timon (5) atteint sa position de travail (5D), l'oreille (35) du carter de renvoi (19) est en appui sur la face (37) de l'arrêt (38). Parallèlement, le pivotement du carter de renvoi (19) dans le sens (39) a sollicité l'organe élastique de pilotage (33) qui a ainsi emmagasiné de l'énergie.

Pour passer de la position de fauchage à droite du véhicule tracteur (figure 9) à la position de fauchage à gauche (figure 8), on allonge le vérin de manoeuvre (309) en injectant du fluide par la conduite (54) pour faire pivoter le timon (5) dans le sens (40) autour de l'axe géométrique (7) de la position de travail (5D) dans la position de travail (5G). Ce faisant, l'extrémité intérieure de la tige (326) se retire progressivement de la chambre de pilotage (51) et aspire le fluide contenu dans le deuxième vérin de pilotage (46). Le carter de renvoi (19) pivote alors dans le même sens (40) autour de l'axe géométrique (23) sous l'action combinée du raccourcissement du deuxième vérin de pilotage (46) et de l'organe élastique de pilotage (33). Lorsque le timon (5) atteint sa position de travail (5G), l'oreille (34) du carter de renvoi (19) est en appui sur la face (36) de l'arrêt (38).

Parallèlement, il est là aussi prévu que la réaction générée par le couple d'entraînement appliqué au carter de renvoi (19) tende à faire pivoter le carter de renvoi (19) dans le sens (40).

Les figures 10 et 11 montrent un cinquième exemple de réalisation d'un moyen de pilotage (424) équipant une machine agricole (401). Celui-ci comporte un premier vérin de pilotage (445) et un deuxième vérin de pilotage (446) branchés en circuit fermé à l'aide de deux conduites (47, 55). Dans cet exemple de réalisation, le premier vérin de pilotage (445) et le deuxième vérin de pilotage (446) sont donc du type à double effet.

Là-aussi, le premier vérin de pilotage (445) et le vérin de manoeuvre (309) forment un ensemble (448) articulé entre le timon (5) et le châssis (310) du corps (403). Cet ensemble (448) comporte un corps de cylindre (449) présentant une chambre de manoeuvre (50) et une chambre de pilotage (451). Cet ensemble (448) comporte par ailleurs une tige (426) articulée à son extrémité extérieure sur le châssis (310) et dont l'extrémité intérieure comporte un piston de pilotage (56) qui s'étend dans la chambre de pilotage (451) pour former avec celle-ci le premier vérin de pilotage (445). Dans sa partie médiane, ladite tige (426) comporte par ailleurs le piston de manoeuvre (52) qui s'étend dans la chambre de manoeuvre (50) pour former avec celle-ci le vérin de manoeuvre (309).

Le deuxième vérin de pilotage (446), quant à lui, est articulé entre le mécanisme de récolte (411) et le carter de renvoi (219).

Le placement du carter de renvoi (219) dans la position opérationnelle adéquate est réalisé de la manière suivante.

Pour passer de la position de fauchage à gauche du véhicule tracteur (figure 10) à la position de fauchage à droite (figure 11), on raccourcit le vérin de manoeuvre (309) en injectant du fluide par la conduite (53) pour faire pivoter le timon (5) dans le sens (39) autour de l'axe géométrique (7) de la position de travail (5G) dans la position de travail (5D). Ce faisant, l'extrémité intérieure de la tige (426) et le piston de pilotage (56) plongent de plus en plus profondément dans la chambre de pilotage (451). Le piston de pilotage (56) chasse alors du fluide dans le deuxième vérin de pilotage (446) au travers de la conduite (47). Parallèlement, du fluide contenu dans le deuxième vérin de pilotage (446) est transvasé dans le premier vérin de pilotage (445) par la conduite (55). De ce fait, le deuxième vérin de pilotage (446) s'allonge et fait pivoter le carter de renvoi (219) dans le même sens (39) autour de l'axe géométrique (23).

Pour passer de la position de fauchage à droite du véhicule tracteur (figure 11) à la position de fauchage à gauche (figure 10), on allonge le vérin de manoeuvre (309) en injectant du fluide par la conduite (54) pour faire pivoter le timon (5) dans le sens (40) autour de l'axe géométrique (7) de la position de travail (5D) dans la position de travail (5G). Ce faisant, l'extrémité intérieure de la tige (426) et le piston de pilotage (56) se retirent progressivement de la chambre de pilotage (451). Le piston de pilotage (56) chasse alors du fluide dans le deuxième vérin de pilotage (446) au travers de la conduite (55). Parallèlement, du fluide contenu dans le deuxième vérin de pilotage (446) est transvasé dans le premier vérin de pilotage (445) par la conduite (47). De ce fait, le deuxième vérin de pilotage (446) se raccourcit et fait pivoter le carter de renvoi (219) dans le même sens (40) autour de l'axe géométrique (23).

Un arrêt (38) pourra être prévu dans tous les exemples de réalisation qui viennent d'être décrits ; ledit arrêt (38) pourra de plus être réalisé sous forme de butée élastique, telle qu'une butée caoutchouc par exemple.

Différentes modifications restent possibles sans pour autant sortir du domaine de protection défini par les revendications.

## Revendications

1. Machine agricole comportant
- un corps (3 ; 103 ; 203 ; 303 ; 403) muni d'au moins un organe de travail (12, 13) ;
- un moyen de liaison (5) permettant de lier ladite machine agricole (1; 101 ; 201 ; 301 ; 401) à un véhicule tracteur, lequel moyen de liaison (5) est lié audit corps (3 ; 103 ; 203 ; 303 ; 403) par une première articulation (6) d'axe (7) dirigé vers le haut ;
- un organe de manoeuvre (9 ; 309) destiné à pivoter le moyen de liaison (5) par rapport audit corps (3 ; 103 ; 203 ; 303 ; 403) autour de l'axe (7) de ladite première articulation (6), ledit moyen de liaison (5) pouvant ainsi être placé dans au moins deux positions de travail (5G, 5D) ;
- des organes de transmission (18, 19, 20 ; 18, 119, 20 ; 18, 219, 20) destinés à assurer l'animation dudit (desdits) organe(s) de travail (12, 13), ces organes de transmission (18, 19, 20 ; 18, 119, 20 ; 18, 219, 20) comportant au moins un carter de renvoi (19 ; 119 ; 219) lié au corps (3 ; 103 ; 203 ; 303 ; 403) par une deuxième articulation (22) d'axe (23) également dirigé vers le haut ; et
- un moyen de pilotage (24 ; 124 ; 224 ; 324 ; 424) destiné à pivoter ledit carter de renvoi (19 ; 119 ; 219) par rapport audit corps (3 ; 103 ; 203 ; 303 ; 403) autour de l'axe (23) de ladite deuxième articulation (22), ledit carter de renvoi (19 ; 119 ; 219) pouvant être placé dans des positions opérationnelles correspondant auxdites positions de travail (5G, 5D) du moyen de liaison (5) ;
***caractérisée en ce* que** ledit moyen de pilotage (24 ; 124 ; 224 ; 324 ; 424) est implanté entre le carter de renvoi (19 ; 119 ; 219) et l'organe de manoeuvre (9 ; 309) de telle sorte que le carter de renvoi (19 ; 119 ; 219) soit amené dans la position opérationnelle adéquate lorsque l'organe de manoeuvre (9 ; 309) amène le moyen de liaison (5) dans l'une quelconque de ses différentes positions de travail (5G, 5D).

2. Machine agricole selon la revendication 1, ***caractérisée en ce* que** le moyen de pilotage (24 ; 124) comporte un câble (25 ; 125) lié entre l'organe de manoeuvre (9) et le carter de renvoi (19 ; 119).

3. Machine agricole selon la revendication 2, ***caractérisée en ce* que** :
- le câble (25) passe dans une gaine (29) et commande le pivotement du carter de renvoi (19) dans un premier sens (39) ; et
- le moyen de pilotage (24) comporte en sus un organe élastique de pilotage (33) implanté entre le corps (3) et le carter de renvoi (19) et commandant le pivotement dudit carter de renvoi (19) dans un deuxième sens (40).

4. Machine agricole selon la revendication 3, ***caractérisée en ce* que** la réaction générée par le couple d'entraînement appliqué au carter de renvoi (19) tend à faire pivoter ledit carter de renvoi (19) dans le deuxième sens (40) .

5. Machine agricole selon la revendication 3 ou 4, ***caractérisée en ce* que** l'organe de manoeuvre (9) agit sur le câble (25) au moyen d'un élément élastique, de préférence de compression.

6. Machine agricole selon la revendication 2, ***caractérisée en ce* que** le câble (125) constitue une boucle fermée qui passe dans deux demi-gaines (129A, 129B) implantées sur le corps (103).

7. Machine agricole selon l'une quelconque des revendications 3 à 6, ***caractérisée en ce* que** la gaine (29) ou les deux demi-gaines (129A, 129B) sont mises en compression par un élément élastique de compression (32 ; 132A, 132B).

8. Machine agricole selon l'une quelconque des revendications 2 à 7, ***caractérisée en ce* que** l'organe de manoeuvre (9) comporte un vérin de manoeuvre articulé entre le moyen de liaison (5) et le corps (3 ; 103), le câble (25 ; 125) étant lié audit vérin de manoeuvre (9) dans le voisinage de l'articulation (28) liant ledit vérin (9) au corps (3 ; 103).

9. Machine agricole selon la revendication 8, ***caractérisée en ce* que** le vérin de manoeuvre (9) comporte un prolongement (27) s'étendant au-delà de l'articulation (28) liant ledit vérin de manoeuvre (9) au corps (3 ; 103), le câble (25 ; 125) étant lié audit prolongement (27).

10. Machine agricole selon la revendication 1, ***caractérisée en ce* que** le moyen de pilotage (224) comporte une tringlerie (41, 42, 43).

11. Machine agricole selon la revendication 10, ***caractérisée en ce* que** la tringlerie (41, 42, 43) comporte :
- un levier (41) articulé sur le corps (203) ;
- une première bielle (42) implantée entre l'organe de manoeuvre (9) et ledit levier (41) ; et
- une deuxième bielle (43) implantée entre ledit levier (41) et le carter de renvoi (219).

12. Machine agricole selon la revendication 11, ***caractérisée en ce* que** :
- le levier (41) est articulé, à la première de ses extrémités, sur le corps (203);
- la deuxième bielle (43) est articulée sur la deuxième extrémité dudit levier (41); et
- la première bielle (42) est articulée sur ledit levier (41) entre les deux extrémités de ce dernier.

13. Machine agricole selon l'une quelconque des revendications 10 à 12, ***caractérisée en ce* que** l'organe de manoeuvre (9) comporte un vérin de manoeuvre articulé entre le moyen de liaison (5) et le corps (203), la tringlerie (41, 42, 43 ) étant liée audit vérin de manoeuvre (9) dans le voisinage de l'articulation (28) liant ledit vérin de manoeuvre (9) au corps (203).

14. Machine agricole selon la revendication 13, ***caractérisée en ce* que** le vérin de manoeuvre (9) comporte un prolongement (27) s'étendant au-delà de l'articulation (28) liant ledit vérin de manoeuvre (9) au corps (203), la tringlerie (41, 42, 43) étant liée audit prolongement (27).

15. Machine agricole comportant :
- un corps (303 ; 403) muni d'au moins un organe de travail (12, 13) ;
- un moyen de liaison (5) permettant de lier ladite machine agricole (301 ; 401) à un véhicule tracteur, lequel moyen de liaison (5) est lié audit corps (303 ; 403) par une première articulation (6) d'axe (7) dirigé vers le haut ;
- un organe de manoeuvre (309) destiné à pivoter le moyen de liaison (5) par rapport audit corps (303 ; 403) autour de l'axe (7) de ladite première articulation (6), ledit moyen de liaison (5) pouvant ainsi être placé dans au moins deux positions de travail ( 5G, 5D) ;
- des organes de transmission (18, 19, 20 ; 18, 219, 20) destinés à assurer l'animation dudit (desdits) organe(s) de travail (12, 13), ces organes de transmission (18, 19, 20 ; 18, 219, 20) comportant au moins un carter de renvoi (19 ; 219) lié au corps (303, 403) par une deuxième articulation (22) d'axe (23) également dirigé vers le haut ; et
- un moyen de pilotage (324 ; 424) destiné à pivoter ledit carter de renvoi (19 ; 219) par rapport audit corps (303 ; 403) autour de l'axe (23) de ladite deuxième articulation (22), ledit carter de renvoi (19 ; 219) pouvant être placé dans des positions opérationnelles correspondant auxdites positions de travail (5G, 5D) du moyen de liaison (5) ;
***caractérisée en ce* que** ledit moyen de pilotage (324 ; 424) comporte
- un premier vérin de pilotage (45 ; 445) implanté entre le moyen de liaison (5) et le corps (303 ; 403) ; et
- un deuxième vérin de pilotage (46 ; 446) implanté entre le corps (303 ; 403) et le carter de renvoi (19 ; 219) et branché en série avec le premier vérin de pilotage (45 ; 445).

16. Machine agricole selon la revendication 15, ***caractérisée en ce* que** :
- le premier vérin de pilotage (45) et le deuxième vérin de pilotage (46) sont du type à simple effet, ledit deuxième vérin de pilotage (46) commandant le pivotement du carter de renvoi (19) dans un premier sens (39) ; et
- le moyen de pilotage (324) comporte en sus un organe élastique de pilotage (33) implanté entre le corps (303) et le carter de renvoi (19) et commandant le pivotement dudit carter de renvoi (19) dans un deuxième sens (40).

17. Machine agricole selon la revendication 16, ***caractérisée en ce* que** la réaction générée par le couple d'entraînement appliqué au carter de renvoi (19) tend à faire pivoter ledit carter de renvoi (19) dans le deuxième sens (40).

18. Machine agricole selon la revendication *15,* ***caractérisée en ce* que** le premier vérin de pilotage (445) et le deuxième vérin de pilotage (446) sont du type à double effet et sont branchés en circuit fermé.

19. Machine agricole selon l'une quelconque des revendications 15 à 18, ***caractérisée en* ce que** l'organe de manoeuvre (309) comporte un vérin de manoeuvre articulé entre le moyen de liaison (5) et le corps (303 ; 403).

20. Machine agricole selon la revendication 19 dans sa dépendance avec la revendication 16 ou 17, ***caractérisée en ce* que** :
- le vérin de manoeuvre (309) et le premier vérin de pilotage (45) forment un ensemble (48) articulé entré le moyen de liaison (5) et le corps (303) ;
- ledit ensemble (48) comporte :
• un corps de cylindre (49) muni d'une chambre de manoeuvre (50) et d'une chambre de pilotage (51), et
• une tige (326) munie d'un piston de manoeuvre (52) qui s'étend dans la chambre de manoeuvre (50) de sorte à former avec celle-ci le vérin de manoeuvre (309), ladite tige (326) s'étendant par ailleurs dans la chambre de pilotage (51) pour former avec celle-ci le premier vérin de pilotage (45).

21. Machine agricole selon la revendication 19 dans sa dépendance avec la revendication 18, ***caractérisée en ce* que** :
- le vérin de manoeuvre (309) et le premier vérin de pilotage (445) forment un ensemble (448) articulé entre le moyen de liaison (5) et le corps (403) ;
- ledit ensemble (448) comporte
• un corps de cylindre (449) muni d'une chambre de manoeuvre (50) et d'une chambre de pilotage (451), et
• une tige (426) munie d'un piston de manoeuvre (52) qui s'étend dans la chambre de manoeuvre (50) de sorte à former avec celle-ci le vérin de manoeuvre (309), ladite tige (426) comportant par ailleurs un piston de pilotage (56) s'étendant dans la chambre de pilotage (451) pour former avec celle-ci le premier vérin de pilotage (445).

22. Machine agricole selon la revendication 8, 9, 13, 14, 19, 20 ou 21, ***caractérisée en ce* que** le vérin de manoeuvre (9 ; 309) est du type à double effet.

23. Machine selon l'une quelconque des revendications 1 à 22, ***caractérisée en ce* que** le carter de renvoi (19 ; 119 ; 219) peut occuper deux positions opérationnelles dont chacune est définie par une butée (36, 37) respective aménagée sur le corps (3 ; 103 ; 303 ; 403).

24. Machine agricole selon l'une quelconque des revendications 1 à 23, ***caractérisée en ce* que** les organes de transmission (18, 19, 20 ; 18, 119, 20 ; 18, 219, 20) comportent au moins un arbre de transmission télescopique (20) à joints universels branché sur l'arbre d'entrée (21) du carter de renvoi (19 ; 119; 219).

25. Machine agricole selon la revendication 24, ***caractérisée en ce* que** ledit arbre de transmission (20) ou l'un au moins desdits arbres de transmission est supporté par le moyen de liaison (5).

26. Machine agricole selon l'une quelconque des revendications 1 à 25, ***caractérisée en ce* que** les organes de transmission (18, 19, 20 ; 18, 119, 20 ; 18, 219 , 20) reçoivent le mouvement de la prise de force du véhicule tracteur auquel elle est destinée à être attelée.

27. Machine agricole selon l'une quelconque des revendications 1 à 26,
***caractérisée en ce* que** :
- le corps (3 ; 103 ; 203 ; 303 ; 403) s'appuie sur le sol à l'aide d'au moins une roue (4) ;
- le moyen de liaison (5) est constitué d'un timon lié à la partie médiane dudit corps (3 ; 103 ; 203 ; 303 ; 403).

28. Machine agricole selon l'une quelconque des revendications 1 à 27,
***caractérisée en ce* que** le corps (3 ; 103 ; 203 ; 303 ; 403) comporte un châssis (10 ; 110 ; 210 ; 310) auquel est lié le moyen de liaison (5) et dans lequel est (sont) suspendu(s) le (les) organe(s) de travail (12, 13) au moyen d'un dispositif de suspension (14) de sorte à pouvoir se déplacer par rapport au châssis (10 ; 110 ; 210 ; 310) pour s'adapter au relief du sol.

## Patentansprüche

1. Landmaschine, die
- einen mit mindestens einem Arbeitselement (12, 13) versehenen Körper (3; 103; 203; 303; 403);
- ein Verbindungsmittel (5), das die Verbindung der Landmaschine (1; 101; 201; 301; 401) mit einem Schlepper gestattet, wobei das Verbindungsmittel (5) über ein erstes Gelenk (6) mit einer nach oben ausgerichteten Achse (7) mit dem Körper (3; 103; 203; 303; 403) verbunden ist;
- ein Betätigungselement (9; 309) zum Schwenken des Verbindungsmittels (5) bezüglich des Körpers (3; 103; 203; 303; 403) um die Achse (7) des ersten Gelenks (6), wobei das Verbindungsmittel (5) somit in mindestens zwei Arbeitsstellungen (5G, 5D) angeordnet werden kann;
- Übertragungselemente (18, 19, 20; 18, 119, 20; 18, 219, 20) zur Gewährleistung des Antriebs des Arbeitselements bzw. der Arbeitselemente (12, 13), wobei diese Übertragungselemente (18, 19, 20; 18, 119, 20; 18, 219, 20) mindestens ein Getriebegehäuse (19; 119; 219) umfassen, das über ein zweites Gelenk (22) mit einer ebenfalls nach oben ausgerichteten Achse (23) mit dem Körper (3; 103; 203; 303; 403) verbunden ist; und
- ein Steuermittel (24; 124; 224; 324; 424) zum Schwenken des Getriebegehäuses (19; 119; 219) bezüglich des Körpers (3; 103; 203; 303; 403) um die Achse (23) des zweiten Gelenks (22), wobei das Getriebegehäuse (19; 119; 219) in Betriebsstellungen positioniert werden kann, die den Arbeitsstellungen (5G, 5D) des Verbindungsmittels (5) entsprechen;
umfaßt, ***dadurch gekennzeichnet,* daß** das Steuermittel (24; 124; 224; 324; 424) derart zwischen dem Getriebegehäuse (19; 119; 219) und dem Betätigungselement (9; 309) angeordnet ist, daß das Getriebegehäuse (19; 119; 219) in die angemessene Betriebsstellung gebracht wird, wenn das Betätigungselement (9; 309) das Verbindungsmittel (5) in irgendeine seiner verschiedenen Arbeitsstellungen (5G, 5D) bringt.

2. Landmaschine nach Anspruch 1, ***dadurch gekennzeichnet,* daß** das Steuermittel (24; 124) ein zwischen dem Betätigungselement (9) und dem Getriebegehäuse (19; 119) verbundenes Seil (25; 125) umfaßt.

3. Landmaschine nach Anspruch 2, ***dadurch gekennzeichnet,* daß**
- das Seil (25) eine Hülse (29) durchquert und das Schwenken des Getriebegehäuses (19) in eine erste Richtung (39) bewirkt; und
- das Steuermittel (24) des weiteren ein elastisches Steuerelement (33) umfaßt, das zwischen dem Körper (3) und dem Getriebegehäuse (19) angeordnet ist und das Schwenken des Getriebegehäuses (19) in eine zweite Richtung (40) bewirkt.

4. Landmaschine nach Anspruch 3, ***dadurch gekennzeichnet,* daß** die durch das an das Getriebegehäuse (19) angelegte Antriebsmoment erzeugte Reaktion dahingehend wirkt, das Getriebegehäuse (19) in die zweite Richtung (40) zu schwenken.

5. Landmaschine nach Anspruch 3 oder 4, ***dadurch gekennzeichnet,* daß** das Betätigungselement (9) mittels eines elastischen Elements, vorzugsweise eines Druckelements, auf das Seil (25) einwirkt.

6. Landmaschine nach Anspruch 2, ***dadurch gekennzeichnet,* daß** das Seil (125) eine geschlossene Schleife bildet, die zwei im Körper (103) angebrachten Hülsenhälften (129A, 129B) durchquert.

7. Landmaschine nach irgend einem der Ansprüche 3 bis 6, ***dadurch gekennzeichnet,* daß** die Hülse (29) oder die beiden Hülsenhälften (129A, 129B) durch ein elastisches Druckelement (32; 132A, 132B) druckbeaufschlagt werden.

8. Landmaschine nach irgend einem der Ansprüche 2 bis 7, ***dadurch gekennzeichnet,* daß** das Betätigungselement (9) einen Betätigungszylinder umfaßt, der zwischen dem Verbindungsmittel (5) und dem Körper (3; 103) angelenkt ist, wobei das Seil (25; 125) in der Nähe des den Zylinder (9) mit dem Körper (3; 103) verbindenden Gelenks (28) mit dem Betätigungszylinder (9) verbunden ist.

9. Landmaschine nach Anspruch *8,* ***dadurch gekennzeichnet,* daß** der Betätigungszylinder (9) eine Verlängerung (27) aufweist, die sich über das den Betätigungszylinder (9) mit dem Körper (3; 103) verbindende Gelenk (28) hinaus erstreckt, wobei das Seil (25; 125) mit der Verlängerung (27) verbunden ist.

10. Landmaschine nach Anspruch 1, ***dadurch gekennzeichnet,* daß** das Steuermittel (224) ein Gestänge (41, 42, 43) enthält.

11. Landmaschine nach Anspruch 10, ***dadurch gekennzeichnet,* daß** das Gestänge (41, 42, 43)
- einen am Körper (203) angelenkten Hebel (41);
- eine zwischen dem Betätigungselement (9) und dem Hebel (41) angeordnete erste Stange (42); und
- eine zwischen dem Hebel (41) und dem Getriebegehäuse (219) angeordnete zweite Stange (43), umfaßt.

12. Landmaschine nach Anspruch 11, ***dadurch gekennzeichnet,* daß**
- der Hebel (41) am ersten seiner Enden am Körper (203) angelenkt ist;
- die zweite Stange (43) am zweiten Ende des Hebels (41) angelenkt ist; und
- die erste Stange (42) zwischen den beiden Enden des Hebels (41) an diesem angelenkt ist.

13. Landmaschine nach irgend einem der Ansprüche 10 bis *12,* ***dadurch gekennzeichnet,* daß** das Betätigungselement (9) einen zwischen dem Verbindungsmittel (5) und dem Körper (203) angelenkten Betätigungszylinder umfaßt, wobei das Gestänge (41, 42, 43) in der Nähe des den Betätigungszylinder (9) mit dem Körper (203) verbindenden Gelenks (28) mit dem Betätigungszylinder (9) verbunden ist.

14. Landmaschine nach Anspruch 13, ***dadurch gekennzeichnet,* daß** der Betätigungszylinder (9) eine Verlängerung (27) enthält, die sich über das den Betätigungszylinder (9) mit dem Körper (203) verbindende Gelenk (28) hinaus erstreckt, wobei das Gestänge (41, 42, 43) mit der Verlängerung (27) verbunden ist.

15. Landmaschine, die
- einen mit mindestens einem Arbeitselement (12, 13) versehenen Körper (303; 403);
- ein Verbindungsmittel (5), das die Verbindung der Landmaschine (301; 401) mit einem Schlepper gestattet, wobei das Verbindungsmittel (5) über ein erstes Gelenk (6) mit einer nach oben ausgerichteten Achse (7) mit dem Körper (303; 403) verbunden ist;
- ein Betätigungselement (309) zum Schwenken des Verbindungsmittels (5) bezüglich des Körpers (303; 403) um die Achse (7) des ersten Gelenks (6), wobei das Verbindungsmittel (5) somit in mindestens zwei Arbeitsstellungen (5G, 5D) angeordnet werden kann;
- Übertragungselemente (18, 19, 20; 18, 219, 20) zur Gewährleistung des Antriebs des Arbeitselements bzw. der Arbeitselemente (12, 13), wobei diese Übertragungselemente (18, 19, 20; 18, 219, 20) mindestens ein Getriebegehäuse (19; 219) umfassen, das über ein zweites Gelenk (22) mit einer ebenfalls nach oben ausgerichteten Achse (23) mit dem Körper (303; 403) verbunden ist; und
- ein Steuermittel (324; 424) zum Schwenken des Getriebegehäuses (19; 219) bezüglich des Körpers (303; 403) um die Achse (23) des zweiten Gelenks (22), wobei das Getriebegehäuse (19; 219) in Betriebsstellungen positioniert werden kann, die den Arbeitsstellungen (5G, 5D) des Verbindungsmittels (5) entsprechen;
umfaßt, ***dadurch gekennzeichnet,* daß** das Steuermittel (324; 424)
- einen ersten Steuerzylinder (45; 445), der zwischen dem Verbindungsmittel (5) und dem Körper (303; 403) angeordnet ist; und
- einen zweiten Steuerzylinder (46; 446), der zwischen dem Körper (303; 403) und dem Getriebegehäuse (19; 219) angeordnet und mit dem ersten Steuerzylinder (45; 445) in Reihe geschaltet ist,
umfaßt.

16. Landmaschine nach Anspruch 15, ***dadurch gekennzeichnet,* daß**
- der erste Steuerzylinder (45) und der zweite Steuerzylinder (46) einfachwirkende Zylinder sind, wobei der zweite Steuerzylinder (46) das Schwenken des Getriebegehäuses (19) in eine erste Richtung (39) bewirkt; und
- das Steuermittel (324) des weiteren ein elastisches Steuerelement (33) enthält, das zwischen dem Körper (303) und dem Getriebegehäuse (19) angeordnet ist und das Schwenken des Getriebegehäuses (19) in eine zweite Richtung (40) bewirkt.

17. Landmaschine nach Anspruch 16, ***dadurch gekennzeichnet,* daß** die durch das an das Getriebegehäuse (19) angelegte Antriebsmoment erzeugte Reaktion dahingehend wirkt, das Getriebegehäuse (19) in die zweite Richtung (40) zu schwenken.

18. Landmaschine nach Anspruch 15, ***dadurch gekennzeichnet,* daß** der erste Steuerzylinder (445) und der zweite Steuerzylinder (446) doppeltwirkende Zylinder und in einem geschlossenen Kreislauf verbunden sind.

19. Landmaschine nach irgend einem der Ansprüche 15 bis 18, ***dadurch gekennzeichnet,* daß** das Betätigungselement (309) einen Betätigungszylinder umfaßt, der zwischen dem Verbindungsmittel (5) und dem Körper (303; 403) angelenkt ist.

20. Landmaschine nach Anspruch 19, sofern von Anspruch 16 oder 17 abhängig, ***dadurch gekennzeichnet,* daß**
- der Betätigungszylinder (309) und der erste Steuerzylinder (45) eine zwischen dem Verbindungsmittel (5) und dem Körper (303) angelenkte Anordnung (48) bilden;
- die Anordnung (48)
• einen mit einer Betätigungskammer (50) und einer Steuerkammer (51) versehenen Zylinderkörper (49) und
• eine mit einem Betätigungskolben (52), der sich in die Betätigungskammer (50) erstreckt, um mit dieser den Betätigungszylinder (309) zu bilden, versehene Stange (326) enthält, wobei sich letztere weiterhin in die Steuerkammer (51) erstreckt, um mit dieser den ersten Steuerzylinder (45) zu bilden.

21. Landmaschine nach Anspruch 19, sofern von Anspruch 18 abhängig, ***dadurch gekennzeichnet,* daß**
- der Betätigungszylinder (309) und der erste Steuerzylinder (445) eine zwischen dem Verbindungsmittel (5) und dem Körper (403) angelenkte Anordnung (448) bilden,
- diese Anordnung (448)
• einen mit einer Betätigungskammer (50) und einer Steuerkammer (451) versehenen Zylinderkörper (449) und
• eine mit einem Betätigungskolben (52), der sich in die Betätigungskammer (50) erstreckt, um mit dieser den Betätigungszylinder (309) zu bilden, versehene Stange (426) enthält, wobei letztere weiterhin einen Steuerkolben (56) enthält, der sich in die Steuerkammer (451) erstreckt, um mit dieser den ersten Steuerzylinder (445) zu bilden.

22. Landmaschine nach Anspruch 8, 9, 13, 14, 19, 20 oder 21, ***dadurch gekennzeichnet,* daß** der Betätigungszylinder (9; 309) ein doppeltwirkender Zylinder ist.

23. Maschine nach irgend einem der Ansprüche 1 bis 22, ***dadurch gekennzeichnet,* daß** das Getriebegehäuse (19; 119; 219) zwei Betriebsstellungen einnehmen kann, wobei jede von ihnen durch einen jeweiligen, am Körper (3; 103; 303; 403) angebrachten Anschlag (36, 37) definiert wird.

24. Landmaschine nach irgend einem der Ansprüche 1 bis 23, ***dadurch gekennzeichnet,* daß** das Übertragungselement (18, 19, 20; 18, 119, 20; 18, 219, 20) mindestens eine Teleskopübertragungswelle (20) mit Kardangelenken umfassen, die mit der Eingangswelle (21) des Getriebegehäuses (19; 119; 219) verbunden ist.

25. Landmaschine nach Anspruch 24, ***dadurch gekennzeichnet,* daß** die Übertragungswelle (20) oder mindestens eine der Übertragungswellen durch das Verbindungsmittel (5) getragen wird.

26. Landmaschine nach irgend einem der Ansprüche 1 bis 25, ***dadurch gekennzeichnet,* daß** die Übertragungselemente (18, 19, 20; 18, 119, 20; 18, 219, 20) die Bewegung von der Zapfwelle des Schleppers, an dem sie angekuppelt ist, erhalten.

27. Landmaschine nach irgend einem der Ansprüche 1 bis 26, ***dadurch gekennzeichnet,* daß**
- sich der Körper (3; 103; 203; 303; 403) mittels mindestens eines Rads (4) auf dem Boden abstützt;
- das Verbindungsmittel (5) aus einer mit dem Mittelteil des Körpers (3; 103; 203; 303; 403) verbundenen Deichsel besteht.

28. Landmaschine nach irgend einem der Ansprüche 1 bis 27, ***dadurch gekennzeichnet,* daß** der Körper (3; 103; 203; 303; 403) einen Rahmen (10; 110; 210; 310) enthält, mit dem das Verbindungsmittel (5) verbunden ist und in dem mittels einer Aufhängevorrichtung (14) das (die) Arbeitselement(e) (12, 13) so aufgehängt ist (sind), daß es (sie) sich bezüglich des Rahmens (10; 110; 210; 310) zur Anpassung an Bodenunebenheiten bewegen kann (können).

## Claims

1. Agricultural machine comprising:
- a body (3; 103; 203; 303; 403) provided with at least one working element (12, 13);
- a connecting means (5) allowing connection of said agricultural machine (1; 101; 201; 301; 401) to a tractor vehicle, which connecting means (5) is connected to said body (3; 103; 203; 303; 403) by a first joint (6) with an upwardly directed axis (7);
- an operating element (9; 309) for pivoting the connecting means (5) with respect to said body (3; 103; 203; 303; 403) about the axis (7) of said first joint (6), said connecting means (5) being positionable in at least two working positions (5G, 5D);
- transmission elements (18, 19, 20; 18, 119, 20; 18, 219, 20) for powering said working element(s) (12, 13), these transmission elements (18, 19, 20; 18, 119, 20; 18, 219, 20) comprising at least one gearbox (19; 119; 219) connected to the body (3; 103; 203; 303; 403) by a second joint (22) with an axis (23) which is also upwardly directed; and
- a control means (24; 124; 224; 324; 424) intended to pivot the said gearbox (19; 119; 219) with respect to said body (3; 103; 203; 303; 403) about the axis (23) of said second joint (22), said gearbox (19; 119; 129) being positionable in operating positions corresponding to said working positions (5G, 5D) of the connecting means (5);
***characterized in* that** said control means (24; 124; 224; 324; 424) is arranged between the gearbox (19; 119; 129) and the operating element (9; 309) so that the gearbox (19; 119; 129) is brought into the appropriate operating position when the operating element (9; 309) brings the connecting means (5) into any of its different working positions (5G, 5D).

2. Agricultural machine according to claim 1, ***characterized in* that** the control means (24; 124) comprises a cable (25; 125) connected between the operating element (9) and the gearbox (19; 119).

3. Agricultural machine according to Claim 2, ***characterized in* that**:
- the cable (25) passes through a sleeve (29) and controls the pivoting of the gearbox (19) in a first direction (39); and
- the control means (24) additionally comprises a flexible control element (33) arranged between the body (3) and the gearbox (19) and controls the pivoting of said gearbox (19) in a second direction (40).

4. Agricultural machine according to Claim 3, ***characterized in* that** the reaction generated by the driving torque applied to the gearbox (19) tends to cause said gearbox (19) to pivot in the second direction (40).

5. Agricultural machine according to Claim 3 or 4, ***characterized in* that** the operating element (9) acts on the cable (25) by means of a flexible element, preferentially a compression element.

6. Agricultural machine according to claim 2, ***characterized in* that** the cable (125) constitutes a closed loop passing through two half-sleeves (129A, 129B) arranged on the body (103).

7. Agricultural machine according to any one of Claims 3 to 6, ***characterized in* that** the sleeve (29) or the two half-sleeves (129A, 129B) are compressed by a flexible compression element (32; 132A, 132B).

8. Agricultural machine according to any one of Claims 2 to 7, ***characterized in* that** the operating element (9) comprises an operating jack articulated between the connecting means (5) and the body (3; 103), the cable (25; 125) being connected to said operating jack (9) in the vicinity of the joint (28) connecting said jack (9) to the body (3; 103).

9. Agricultural machine according to Claim 8, ***characterized in* that** the operating jack (9) comprises an extension (27) extending beyond the joint (28) connecting said operating jack (9) to the body (3; 103), the cable (25; 125) being connected to said extension (27).

10. Agricultural machine according to Claim 1, ***characterized in* that** the control means (224) comprises an articulated rod assembly (41, 42, 43).

11. Agricultural machine according to Claim 10, ***characterized in* that** the articulated rod assembly (41, 42, 43) comprises:
- a lever (41) articulated to the body (203);
- a first rod (42) arranged between the operating element (9) and said lever (41); and
- a second rod (43) arranged between said lever (41) and the gearbox (219).

12. Agricultural machine according to Claim 11, ***characterized in* that**:
- the lever (41) is articulated at its first end to the body (203);
- the second rod (43) is articulated to the second end of said lever (41); and
- the first rod (42) is articulated to said lever (41) between the two ends of the latter.

13. Agricultural machine according to any one of Claims 10 to 12, ***characterized in* that** the operating element (9) comprises an operating jack articulated between the connecting means (5) and the body (203), the articulated rod assembly (41, 42, 43) being connected to said operating jack (9) in the vicinity of the joint (28) connecting said operating jack (9) to the body (203).

14. Agricultural machine according to Claim 13, ***characterized in* that** the operating jack (9) comprises an extension (27) extending beyond the joint (28) connecting said operating jack (9) to the body (203), the articulated rod assembly (41, 42, 43) being connected to said extension (27).

15. Agricultural machine comprising:
- a body (303; 403) provided with at least one working element (12, 13);
- a connecting means (5) allowing connection of said agricultural machine (301; 401) to a tractor vehicle, said connecting means (5) being connected to said body (303; 403) by a first joint (6) with an upwardly directed axis (7);
- an operating element (309) intended to pivot the connecting means (5) with respect to said body (303; 403) about the axis (7) of said first joint (6), said connecting means (5) being positionable in at least two working positions (5G, 5D);
- transmission elements (18, 19, 20; 18, 219, 20) intended to power said working element(s) (12, 13), these transmission elements (18, 19, 20; 18, 219, 20) comprising at least a gearbox (19; 219) connected to the body (303, 403) by a second joint (22) with an axis (23) which is also upwardly directed; and
- a control means (324; 424) intended to pivot said gearbox (19; 219) with respect to said body (303; 403) about the axis (23) of said second joint (22), said gearbox (19; 219) being positionable in operating positions corresponding to said working positions (5G, 5D) of the connecting means (5);
***characterized in* that** said control means (324; 424) comprises:
- a first control jack (45; 445) arranged between the connecting means (5) and the body (303; 403); and
- a second control jack (46; 446) arranged between the body (303; 403) and the gearbox (19; 219) and connected in series with the first control jack (45; 445).

16. Agricultural machine according to claim 15, ***characterized in* that**:
- the first control jack (45) and the second control jack (46) are of the single-effect type, said second control jack (46) controlling the pivoting of the gearbox (19) in a first direction (39); and
- the control means (324) additionally comprises a flexible control element (33) arranged between the body (303) and the gearbox (19) and controlling the pivoting of said gearbox (19) in a second direction (40).

17. Agricultural machine according to claim 16, ***characterized in* that** the reaction generated by the driving torque applied to the gearbox (19) tends to pivot said gearbox (19) in the second direction (40).

18. Agricultural machine according to claim 15, ***characterized in* that** the first control jack (445) and the second control jack (446) are of the dual-action type and are connected in a closed circuit.

19. Agricultural machine according to any one of claims 15 to 18, ***characterized in* that** the operating element (309) comprises an operating jack articulated between the connecting means (5) and the body (303; 403).

20. Agricultural machine according to claim 19 in its dependence to claim 16 or 17, ***characterized in* that**:
- the operating jack (309) and the first control jack (45) form a unit (48) articulated between the connecting means (5) and the body (303);
- said unit (48) comprises:
• a cylinder body (49) provided with an operating chamber (50) and a control chamber (51), and
• a rod (326) provided with an operating piston (52) extending into the operating chamber (50) so as to form with the latter the operating jack (309), said rod (326) furthermore extending into the control chamber (51) so as to form with the latter the first control jack (45).

21. Agricultural machine according to claim 19 in its dependence to claim 18,
***characterized in* that**:
- the operating jack (309) and the first control jack (445) form a unit (448) articulated between the connecting means (5) and the body (403);
- said unit (448) comprises:
• a cylinder body (449) provided with an operating chamber (50) and a control chamber (451), and
• a rod (426) provided with an operating piston (52) extending into the operating chamber (50) so as to form with the latter the operating jack (309), said rod (426) furthermore comprising a control piston (56) extending into the control chamber (451) so as to form with the latter the first control jack (445).

22. Agricultural machine according to claim 8, 9, 13, 14, 19, 20 or 21, ***characterized in* that** the operating jack (9; 309) is of the dual-acting type.

23. Agricultural machine according to any one of claims 1 to 22, ***characterized in* that** the gearbox (19; 119; 219) can occupy two operating positions, each of which is defined by a respective stop (36, 37) arranged on the body (3; 103; 303; 403).

24. Agricultural machine according to any one of claims 1 to 23, ***characterized in* that** the transmission elements (18, 19, 20; 18, 119, 20; 18, 219, 20) comprises at least a telescopic transmission shaft (20) with cardan joints connected to the entry shaft (21) of the gearbox (19; 119; 219).

25. Agricultural machine according to claim 24, ***characterized in* that** said transmission shaft (20) or one at least of said transmission shafts is carried by the connecting means (5).

26. Agricultural machine according to any one of claims 1 to 25, ***characterized in* that** the transmission elements (18, 19, 20; 18, 119, 20; 18, 219, 20) receive movement of the power take-off of the tractor vehicle to which it is intended to be connected.

27. Agricultural machine according to any one of claims 1 to 26, ***characterized in* that**:
- the body (3; 103; 203; 303; 403) rests on the ground by at least one wheel (4);
- the connecting means (5) is made up of a drawbar connected to the middle part of said body (3; 103; 203; 303; 403).

28. Agricultural machine according to any one of claims 1 to 27, ***characterized in* that** the body (3; 103; 203; 303; 403) comprises a chassis (10; 110; 210; 310) to which the connecting means (5) is connected and to which the working element(s) (12, 13) is (are) suspended by means of a suspension device (14) so as to be moveable with respect to the chassis (10; 110; 210; 310) to adapt to the relief of the ground.
